# EUROPÄISCHE PATENTSCHRIFT

(11) **EP 3 453 258 B1**
(45) Veröffentlichungstag und Bekanntmachung des Hinweises auf die Patenterteilung: **26.08.2020**
(21) Anmeldenummer: 18190902.9
(22) Anmeldetag: 27.08.2018
(51) Int. Cl.: A21C 9/04, A21C 15/00

(54) **Streuvorrichtung für eine Teigbearbeitungsanlage**
SPREADING DEVICE FOR A DOUGH PROCESSING PLANT
DISPOSITIF D'ÉPANDAGE POUR UNE INSTALLATION DE TRAITEMENT DE PÂTE

(30) Priorität: 07.09.2017 DE 102017120609
(43) Veröffentlichungstag der Anmeldung: 13.03.2019
(73) Patentinhaber: Fritsch Bakery Technologies GmbH & Co. KG, 97348 Markt Einersheim (DE)
(72) Erfinder: Wagner, Alex, 97084 Würzburg (DE); Bernhardt, Udo, 97346 Iphofen (DE)
(74) Vertreter: Grünecker Patent- und Rechtsanwälte PartG mbB

(56) Entgegenhaltungen:
- US-A- 3 070 264
- US-A- 3 788 529
- US-A- 4 767 030
- US-A1- 2004 035 301
- US-A1- 2014 326 758
- US-A1- 2015 128 852

## Beschreibung

Die Erfindung betrifft eine Streuvorrichtung für eine Teigbearbeitungsanlage nach dem Oberbegriff des Anspruchs 1.

Bei verschiedensten Herstellungsprozessen in der Lebensmittelindustrie ist es erforderlich, dass Teig bzw. Teigbänder während des Herstellungs-prozesses mit Streugut bestreut werden. Das Bestreuen kann dabei auch in der Weise erfolgen, dass zunächst eine Unterlage mit Streugut bestreut wird, und anschließend der Teig oder das Teigband auf die mit Streugut bestreute Unterlage aufgelegt wird. Gattungsgemäße Streuvor-richtungen sind beispielsweise aus der DE 34 26 974 C2 oder der DE 697 20 325 T2 bekannt. Gemeinsam ist diesen Streuvorrichtungen die Verwendung einer rotatorisch angetriebenen Streuwalze, die unterhalb eines mit Streugut befüllbaren Streugutgehäuses angeordnet ist. Durch Ausgabe von Streugut aus dem Streugutgehäuse tritt das Streugut unter Schwerkraft nach unten aus und wird dadurch auf einen nach oben weisenden Oberflächenabschnitt der rotierenden Streuwalze übertragen. Durch den rotatorischen Antrieb der Streuwalze wird das an der Ober-seite der Streuwalze aufgenommene Streugut dann weiter gefördert und fällt unter Schwerkrafteinfluss und gegebenenfalls unter Zuhilfenahme einer Abstreifbürste anschließend an einem nach unten weisenden Oberflächenabschnitt auf den darunter befindlichen Teig bzw. die den Teig aufnehmende Unterlage. Der Transport des Streuguts innerhalb der Streuvorrichtung erfolgt überwiegend unter Schwerkrafteinfluss, so dass das Streugutgehäuse entsprechend oberhalb der rotatorisch antreibbaren Streuwalze angeordnet sein muss.

Nachteilig an den bekannten Streuvorrichtungen ist deren relativ große Bauhöhe. Denn um einen ausreichenden Vorrat an Streugut in dem Streugutgehäuse aufnehmen zu können, muss dieses eine entsprechende Höhe aufweisen. Diese relativ große Bauhöhe der bekannten Streuvorrichtungen erschwert aber insbesondere den Einbau der Streuvorrichtungen zwischen übereinander angeordneten Teigfördereinrichtungen, wie beispielsweise Förderbändern. Im Ergebnis ist es deshalb bei den bekannten Streuvorrichtungen bei Anordnung zwischen mehreren übereinander vorgesehenen Teigfördereinrichtungen unumgänglich, entsprechend kleine Streugutgehäuse zu verwenden, so dass ein häufiges Auffüllen des Streugutvorrats in dem Streugutgehäuse erforderlich ist.

Aus der US 2014/326758 A1 ist eine Vorrichtung zum Aufbringen von Würz- und Süßungsmitteln auf Lebensmittel bekannt, die eine Fördereinrichtung und einen Applikator umfasst. Die aufzubringenden Substanzen werden durch eine Förderschnecke von der Fördervorrichtung zu dem Applikator gefördert.

Ausgehend von diesem Stand der Technik ist es Aufgabe der vorliegenden Erfindung, eine neue Streuvorrichtung für eine Teigbearbeitungsanlage vorzuschlagen, die die Nachteile des vorbekannten Stands der Technik vermeidet.

Diese Aufgabe wird durch eine Streuvorrichtung nach der Lehre des Anspruchs 1 gelöst.

Vorteilhafte Ausführungsformen der Erfindung sind Gegenstand der Unteransprüche.

Die Erfindung beruht auf dem Grundgedanken, dass die Streuvorrichtung neben dem gattungsgemäß vorhandenen Streugutgehäuse einen zusätzlichen Vorratsbehälter zur Aufnahme eines Streugutvorrats umfasst. Dieser Vorratsbehälter weist dabei eine Ausgabeöffnung auf, an der das Streugut, insbesondere Mehl, aus dem Vorratsbehälter entnommen werden kann. Erfindungsgemäß ist der Vorratsbehälter seitlich der Streuwalze angeordnet. Durch den seitlichen Versatz des Vorratsbehälters zur Streuwalze wird es möglich, dass der Vorratsbehälter neben der Streuwalze bzw. dem Streugutgehäuse angeordnet wird, und gegebenenfalls vorhandene Teigtransporteinrichtungen, beispielsweise Förderbänder, seitlich des Vorratsbehältnisses vorbeigeführt werden können. Um das Streugut aus dem Vorratsbehälter in die Streuvorrichtung fördern zu können, umfasst die erfindungsgemäße Streuvorrichtung eine Querfördereinrichtung, die das Streugut von der Ausgabeöffnung des Vorratsbehälters zum Streugutgehäuse fördert. Durch die Verwendung der Querfördereinrichtung erfolgt die Förderung des Streuguts in der Streuvorrichtung also nicht nur primär nur durch Schwerkrafteinfluss, sondern zusätzlich auch durch entsprechende Förderbewegungen in Horizontalrichtung.

Erfindungsgemäß wird das Streugut mit der Querfördereinrichtung vom Vorratsbehälter in das Streugutgehäuse eingefördert. Dabei ist es selbstverständlich notwendig, dass im Streugutgehäuse ein Streugutvorrat vorhanden ist, so dass jederzeit eine ausreichende Menge Streugut durch die Ausgabeöffnungen nach unten auf die Oberfläche der Streuwalze fallen kann. Um dies zu gewährleisten, wird bei den aus dem Stand der Technik bekannten Streuvorrichtungen eine Sensorik eingesetzt, mit der der Füllstand des Streuguts im Streugutgehäuse überwacht werden kann. Unterschreitet der Füllstand ein vorgegebenes Niveau, wird durch die Sensorik eine Fördereinrichtung aktiviert, um Streugut nachzufördern. Dies hat aber den Nachteil, dass eine aufwendige und störanfällige Sensorik erforderlich ist. Außerdem muss die Fördereinrichtung mit einem eigenen Antrieb unabhängig von den sonstigen Funktionselementen der Streuvorrichtung angetrieben werden, da die Fördereinrichtung abhängig vom Füllstand des Streuguts im Streugutgehäuse ein- und abgeschaltet werden muss.

Um eine Überfüllung des Streugutgehäuses trotz der Förderbewegung der Querfördereinrichtung und ohne Einsatz einer Sensorik zur Überwachung des Füllstandes auszuschließen, sieht die Erfindung vor, im Streugutgehäuse zusätzlich auch eine Rückfördereinrichtung, mit der das Streugut aus dem Streugutgehäuse zurück in den Vorratsbehälter gefördert werden kann. Im Ergebnis ergeben die Querfördereinrichtung und die Rückfördereinrichtung auf diese Weise eine Streugutfördereinrichtung, mit der das Streugut durch den Vorratsbehälter und das Streugutgehäuse im Kreislauf gefördert werden kann. Durch diese Kreislaufförderung des Streuguts werden außerdem Totzonen, in denen das Streugut längere Zeit verweilt, vermieden, was insbesondere von Vorteil ist, wenn die Ausgabeöffnungen des Streugutgehäuses mittels Schiebern verkleinert werden können.

Um eine möglichst platzsparende und flache Streuvorrichtung zu erhalten, ist es besonders vorteilhaft, wenn die Ausgabeöffnung des Vorratsbehälters seitlich über dem Ende der Streuwalze angeordnet ist.

In welcher Bauart die Querfördereinrichtung ausgebildet ist, ist grundsätzlich beliebig. Um eine möglichst effektive Förderbewegung des Streuguts von dem Vorratsbehälter in das Streugutgehäuse zu ermöglichen, ist es besonders vorteilhaft, wenn die Querfördereinrichtung das Streugut von der Ausgabeöffnung parallel zur Streuwalze durch das Streugutgehäuse fördert. In diesem Fall führt das Streugut also von der Ausgabeöffnung des Vorratsbehälters eine rein horizontal ausgerichtete Förderbewegung durch das Streugutgehäuse aus.

In welcher Weise die Querfördereinrichtung konstruktiv ausgebildet ist, ist grundsätzlich ebenfalls beliebig. Besonders einfach und kostengünstig kann die erfindungsgemäße Streuvorrichtung realisiert werden, wenn die Querfördereinrichtung in der Art einer rotatorisch antreibbaren Querförderschnecke ausgebildet ist.

Auch die Rückfördereinrichtung kann besonders einfach und kostengünstig in der Art einer rotatorisch antreibbaren Rückförderschnecke ausgebildet sein.

Um einen möglichst widerstandsfreien Streugutförderumlauf mittels der Querförderschnecke und der Rückförderschnecke zu ermöglichen, ist es besonders vorteilhaft, wenn die Rückförderschnecke parallel zur Querförderschnecke angeordnet ist.

In welcher Weise die Querförderschnecke bzw. die Rückförderschnecke im Streugutgehäuse gelagert ist, ist grundsätzlich beliebig. Um eine möglichst einfache Lagerung der beiden Förderschnecken zu gewährleisten und zugleich eine effektive Förderung des Streuguts entlang der rotierenden Förderschnecken zu ermöglichen, ist es besonders vorteilhaft, wenn die beiden Förderschnecken an der Wandung des Streugutgehäuses drehbar gelagert sind. Dies bedeutet mit anderen Worten, dass Abschnitte der Wandung des Streugutgehäuses entsprechend dem Umfang der beiden Förderschnecken ausgebildet sind. Durch das Umgreifen der beiden Förderschnecken durch die Wandung des Streugutgehäuses wird eine hohe Effektivität bei der Streugutförderung entlang der beiden rotierenden Förderschnecken erreicht.

Im Hinblick auf die Lebensmittelsicherheit ist es besonders vorteilhaft, wenn die Rückförderschnecke und/oder die Querförderschnecke aus lebensmittelechtem Kunststoff hergestellt sind.

Um das Nachrutschen des Streuguts im Vorratsbehälter in Richtung der Querfördereinrichtung zu erleichtern, kann im Vorratsbehälter zusätzlich ein Rührwerk angeordnet sein, mit dem das Streugut im Vorratsbehälter umgerührt wird. Besonders vorteilhaft ist es dabei, wenn das Rührwerk drehfest am zum Vorratsbehälter weisenden Ende der Querförderschnecke befestigt ist. Dann kann auch der Antrieb des Rührwerks einfach durch den Antrieb der Querförderschnecke realisiert werden.

Am vom Vorratsbehälter weg weisenden Ende der Querförderschnecke muss das von der Querförderschnecke geförderte Streugut in Richtung der Rückförderschnecke umgelenkt werden. Um diese Umlenkung des Förderstroms aus Streugut zu erleichtern, ist es besonders vorteilhaft, wenn das Schneckengewinde am vom Vorratsbehälter weg weisenden Ende der Rückförderschnecke über das Schneckengewinde am vom Vorratsbehälter weg weisenden Ende der Querförderschnecke übersteht. Durch diesen Überstand des Schneckengewindes an der Rückförderschnecke gegenüber dem Schneckengewinde an der Querförderschnecke wird eine Umlenkzone gebildet, in der das Streugut von der Querförderschnecke zur Rückförderschnecke leicht umgelenkt werden kann.

Um die Kosten für den Antrieb der Querfördereinrichtung und der Rückfördereinrichtung zu minimieren, ist es besonders vorteilhaft, wenn die Querförderschnecke und die Rückförderschnecke mit einem gemeinsamen Antriebsmotor angetrieben werden.

Bei einem gemeinsamen Antrieb der beiden Förderschnecken mit einem Antriebsmotor ist es besonders vorteilhaft, wenn die beiden Förderschnecken einerseits und der Antriebsmotor andererseits durch ein Getriebe miteinander verbunden werden.

Das Getriebe zum Antrieb der beiden Förderschnecken mittels eines gemeinsamen Antriebsmotors ist dabei vorteilhaft so auszubilden, dass die beiden Förderschnecken mit entgegengesetztem Drehwinkel angetrieben werden. Auf diese Weise können die Schneckengewinde der beiden Förderschnecken mit gleichsinnigem Steigungswinkel ausgebildet werden.

Eine Ausführungsform der Erfindung ist in den Zeichnungen schematisch dargestellt und wird nachfolgend beispielhaft erläutert.

Es zeigen:
- Fig. 1: eine erfindungsgemäße Streuvorrichtung in perspektivischer seitlicher Ansicht;
- Fig. 2: die Streuvorrichtung gemäß Fig. 1 im Längsschnitt;
- Fig. 3: die Streuvorrichtung gemäß Fig. 1 im Querschnitt.

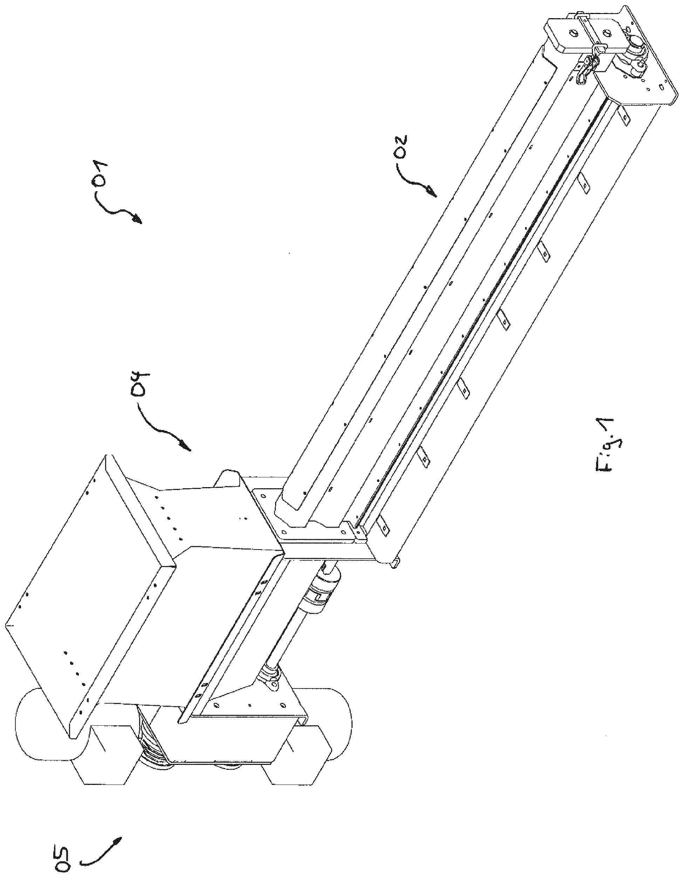

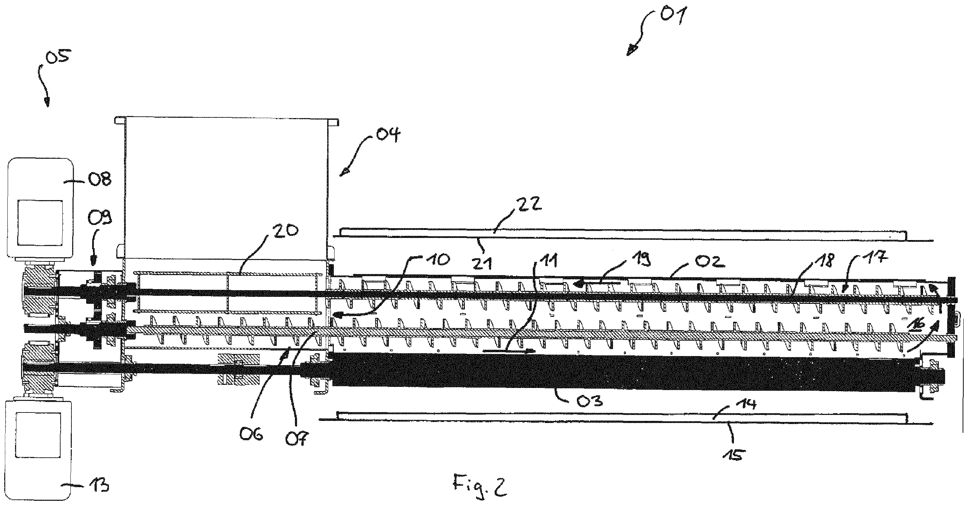

Fig. 1 zeigt eine Streuvorrichtung 01 in perspektivischer seitlicher Ansicht. Die Streuvorrichtung umfasst ein Streugutgehäuse 02 mit einer darunter angeordneten Streuwalze 03 (siehe Fig. 2) und einem seitlich von dem Streugutgehäuse angeordneten Vorratsbehälter 04. Der Antrieb 05 der Streuvorrichtung 01 ist wiederum seitlich des Vorratsbehälters 04 angeordnet. Die Funktion der Streuvorrichtung 01 soll nachfolgend näher erläutert werden.

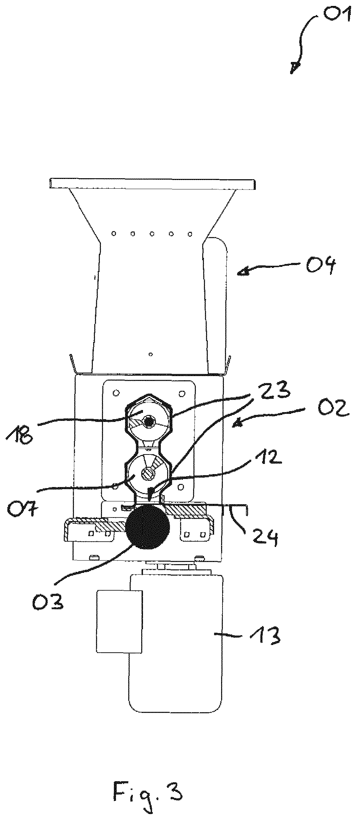

Fig. 2 zeigt die Streuvorrichtung 01 mit dem Streugutgehäuse 02, dem Vorratsbehälter 04 und dem Antrieb 05 im Längsschnitt. Im Inneren des Vorratsbehälters 04 kann eine gewünschte Menge Streugut, insbesondere Mehl, aufgenommen werden. Das Streugut ist dabei in Fig. 2 nicht dargestellt, um die Bauteile der Streuvorrichtung 01 nicht zu verdecken. Das im Vorratsbehälter 04 bevorratete Streugut rutscht unter Schwerkrafteinfluss nach unten in Richtung einer Querfördereinrichtung 06, die in der Art einer Querförderschnecke 07 ausgebildet ist. Durch rotatorischen Antrieb der Querförderschnecke 07 mittels des Antriebsmotors 08, der über ein Getriebe 09 wirkt, wird das Streugut aus dem Vorratsbehälter 04 durch eine Ausgabeöffnung 10 in das Innere des Streugutgehäuses 02 gefördert. Die Querförderschnecke 07 erstreckt sich dabei parallel zur Streuwalze 03 durch das Streugutgehäuse, so dass das Streugut in Querförderrichtung 11 durch das Streugutgehäuse 02 gefördert werden kann. Das so in das Streugutgehäuse 02 eingeförderte Streugut fällt durch eine Ausgabeöffnung 12 (siehe Fig. 3) auf die darunterliegende Streuwalze 03. Durch rotatorischen Antrieb der Streuwalze 03 mittels des Antriebsmotors 13 kann das Streugut dann auf einen Teigstreifen 14 gestreut werden, der mittels eines Förderbands 15 unter der Streuwalze 03 durchgefördert wird.

Am vom Vorratsbehälter 04 weg weisenden Ende der Querförderschnecke 07 befindet sich eine Umlenkzone 16, in der das von der Querförderschnecke 07 geförderte Streugut nach oben in Richtung einer Rückfördereinrichtung 17 umgelenkt wird. Die Rückfördereinrichtung 17, die in der Art einer Rückförderschnecke 18 ausgebildet ist, fördert das Streugut dann in Rückförderrichtung 19 durch die Ausgabeöffnung 10 zurück in den Vorratsbehälter 04. Im Ergebnis wird also das Streugut aus dem Vorratsbehälter 04 durch Antrieb der Querförderschnecke 07 und der Rückförderschnecke 18 im Kreislauf durch das Streugutgehäuse 02 hindurchgefördert.

Um eine Klumpenbildung im zu bevorratenden Streugut zu vermeiden, ist oberhalb der Querförderschnecke 07 ein Rührwerk 20 im Vorratsbehälter 04 vorgesehen, welcher drehfest mit der Rückförderschnecke 18 verbunden ist und somit ebenfalls durch den Antriebsmotor 08 und vermittelt über das Getriebe 09 angetrieben werden kann. Aufgrund der geringen Bauhöhe der Streuvorrichtung 01 im Bereich des Streugutgehäuses 02 kann direkt oberhalb des Streugutgehäuses 02 beispielsweise ein weiteres Förderband 21 vorgesehen sein, auf dem wiederum ein Teigstreifen 22 gefördert werden kann. Durch die Anordnung des Vorratsbehälters 04 seitlich über dem linken Ende der Streuwalze 03 baut nämlich die Streuvorrichtung 01 im Bereich des Streugutgehäuses 02 mit sehr geringer Bauhöhe, so dass ein relativ kleiner Abstand zwischen den Förderbändern 15 und 21 realisiert werden kann. Beide Förderschnecken 07 und 18 sind aus lebensmittelechtem Kunststoff hergestellt.

Fig. 3 zeigt die Streuvorrichtung 01 mit der Streuwalze 03, der Querförderschnecke 07 und der Rückförderschnecke 18 im Querschnitt. Die Querförderschnecke 07 und die Rückförderschnecke 18 sind in der Wandung 23, die den Umfang der beiden Förderschnecken 07 und 18 umschließt, gelagert. Mit Schiebern 24 kann die Ausgabeöffnung 12, an der das Streugut auf die darunterliegende Streuwalze 03 übertragen wird, in ihrem Querschnitt vergrößert bzw. verkleinert werden.

## Patentansprüche

1. Streuvorrichtung (01) für eine Teigbearbeitungsanlage, mit einer rotatorisch antreibbaren Streuwalze (03) und mit einem mit Streugut, insbesondere Mehl, befüllbaren Streugutgehäuse (02), wobei das Streugutgehäuse (02) zumindest eine Ausgabeöffnung (12) aufweist, an der das Streugut auf einen nach oben weisenden Oberflächenabschnitt der rotierenden Streuwalze (03) übertragen werden kann, und wobei das Streugut von einem nach unten weisenden Oberflächenabschnitt der rotierenden Streuwalze (03) auf einen darunter befindlichen Teig gestreut werden kann,
wobei die Streuvorrichtung (01) einen Vorratsbehälter (04) umfasst, in dem ein Streugutvorrat aufgenommen werden kann, wobei der Vorratsbehälter (04) zumindest eine Ausgabeöffnung (10) aufweist, an der das Streugut entnommen werden kann, und wobei der Vorratsbehälter (04) seitlich der Streuwalze (03) angeordnet ist, und wobei das Streugut mit einer Querfördereinrichtung (06) vom Vorratsbehälter (04) zum Streugutgehäuse (02) gefördert werden kann, **dadurch gekennzeichnet, dass** im Streugutgehäuse (02) zusätzlich eine Rückfördereinrichtung (17) vorgesehen ist, mit der das Streugut aus dem Streugutgehäuse (02) zurück in den Vorratsbehälter gefördert werden kann.

2. Streuvorrichtung nach Anspruch 1,
**dadurch gekennzeichnet,**
**dass** zumindest eine Ausgabeöffnung (10) des Vorratsbehälters (04) seitlich über dem einen Ende der Streuwalze (03) angeordnet ist.

3. Streuvorrichtung nach Anspruch 1 oder 2,
**dadurch gekennzeichnet,**
**dass** die Querfördereinrichtung (06) das Streugut von der Ausgabeöffnung (10) des Vorratsbehälters (04) parallel zur Streuwalze (03) durch das Streugutgehäuse (02) fördern kann.

4. Streuvorrichtung nach einem der Ansprüche 1 bis 3,
**dadurch gekennzeichnet,**
**dass** die Querfördereinrichtung (06) in der Art einer rotatorisch antreibbaren Querförderschnecke (07) ausgebildet ist.

5. Streuvorrichtung nach Anspruch 4,
**dadurch gekennzeichnet,**
**dass** die Rückfördereinrichtung (17) in der Art einer rotatorisch antreibbaren Rückförderschnecke (18) ausgebildet ist.

6. Streuvorrichtung nach Anspruch 5,
**dadurch gekennzeichnet,**
**dass** die Rückförderschnecke (18) parallel zur Querförderschnecke (07) angeordnet ist.

7. Streuvorrichtung nach einem der Ansprüche 4 bis 6,
**dadurch gekennzeichnet,**
**dass** die Rückförderschnecke (18) und/oder die Querförderschnecke (07) an der Wandung (23) des Streugutgehäuses (02) drehbar gelagert ist.

8. Streuvorrichtung nach einem der Ansprüche 4 bis 7,
**dadurch gekennzeichnet,**
**dass** die Rückförderschnecke (18) und/oder die Querförderschnecke (07) aus lebensmittelechtem Kunststoff hergestellt ist.

9. Streuvorrichtung nach einem der Ansprüche 1 bis 8,
**dadurch gekennzeichnet,**
**dass** im Vorratsbehälter (04) ein Rührwerk (20) angeordnet ist, mit dem das Streugut im Vorratsbehälter (04) gefördert werden kann.

10. Streuvorrichtung nach Anspruch 9,
**dadurch gekennzeichnet,**
**dass** das Rührwerk (20) am zum Vorratsbehälter (04) weisenden Ende der Rückförderschnecke (18) und/oder am zum Vorratsbehälter (04) weisenden Ende der Querförderschnecke (07) drehfest angeordnet ist.

11. Streuvorrichtung nach einem der Ansprüche 4- bis 10,
**dadurch gekennzeichnet,**
**dass** das Schneckengewinde am vom Vorratsbehälter (04) weg weisenden Ende der Rückförderschnecke (18) über das Schneckengewinde am vom Vorratsbehälter (04) weg weisenden Ende der Querförderschnecke (07) übersteht, wobei dadurch neben dem Ende des Schneckengewindes der Querförderschnecke (07) eine Umlenkzone (16) gebildet wird, in der das Streugut von der Querförderschnecke (07) zur Rückförderschnecke (18) umgelenkt werden kann.

12. Streuvorrichtung nach einem der Ansprüche 5 bis 11,
**dadurch gekennzeichnet,**
**dass** die Querförderschnecke (07) und die Rückförderschnecke (18) mit einem gemeinsamen Antriebsmotor (08) angetrieben werden.

13. Streuvorrichtung nach Anspruch 12,
**dadurch gekennzeichnet,**
**dass** zwischen dem Antriebsmotor (08) einerseits und der Querförderschnecke (07) und der Rückförderschnecke (18) anderseits ein Getriebe (09) vorgesehen ist.

14. Streuvorrichtung nach Anspruch 13,
**dadurch gekennzeichnet,**
**dass** die Querförderschnecke (07) und die Rückförderschnecke (18) vom Getriebe (09) mit entgegengesetztem Drehsinn angetrieben werden.

## Claims

1. Spreading device (01) for a dough processing plant, having a rotationally drivable spreading roller (03) and a spreading material housing (02) which can be filled with spreading material, in particular flour, wherein the spreading material housing (02) comprises at least one discharge opening (12), at which the spreading material can be transferred onto an upwardly facing surface portion of the rotating spreading roller (03), and wherein the spreading material can be spread from a downwardly facing surface portion of the rotating spreading roller (03) onto a dough located thereunder,
wherein the spreading device (01) comprises a storage container (04) in which a supply of spreading material can be accommodated, wherein the storage container (04) comprises at least one discharge opening (10) at which the spreading material can be removed, and wherein the storage container (04) is arranged to the side of the spreading roller (03), and wherein the spreading material can be conveyed from the storage container (04) to the spreading material housing (02) by a transverse conveying device (06),
**characterized in that**
a return conveying device (17) is additionally provided in the spreading material housing (02), with which the spreading material can be conveyed from the spreading material housing (02) back into the storage container.

2. Spreading device according to claim 1,
**characterized in**
**that** at least one discharge opening (10) of the storage container (04) is arranged laterally above one end of the spreading roller (03).

3. Spreading device according to claim 1 or 2,
**characterized in**
**that** the transverse conveying device (06) can convey the spreading material from the discharge opening (10) of the storage container (04) in parallel with the spreading roller (03) through the spreading material housing (02).

4. Spreading device according to one of claims 1 to 3,
**characterized in**
**that** the transverse conveying device (06) is designed in the manner of a rotationally drivable transverse conveying screw (07).

5. Spreading device according to claim 4,
**characterized in**
**that** the return conveying device (17) is designed in the manner of a rotationally drivable return conveying screw (18).

6. Spreading device according to claim 5,
**characterized in**
**that** the return conveying device (17) is arranged parallel to the transverse conveying screw (07).

7. Spreading device according to one of claims 4 to 6,
**characterized in**
**that** the return conveying screw (18) and/or the transverse conveying screw (07) is/are rotatably mounted on the wall (23) of the spreading material housing (02).

8. Spreading device according to one of claims 4 to 7,
**characterized in**
**that** the return conveying screw (18) and/or the transverse conveying screw (07) is/are made of food-safe plastic.

9. Spreading device according to one of claims 1 to 8,
**characterized in**
**that** an agitator (20) is arranged in the storage container (04), with which the spreading material in the storage container (04) can be conveyed.

10. Spreading device according to claim 10,
**characterized in**
**that** the agitator (20) is arranged in a rotationally fixed manner at the end of the return conveying screw (18) facing the storage container (04) and/or at the end of the transverse conveying screw (07) facing the storage container (04).

11. Spreading device according to one of claims 5 to 10,
**characterized in**
**that** the screw thread at the end of the return conveying screw (18) facing away from the storage container (04) projects beyond the screw thread at the end of the transverse conveying screw (07) facing away from the storage container (04), wherein a deflection zone (16) is thereby formed next to the end of the screw thread of the transverse conveying screw (07), in which deflection zone (16) the spreading material can be deflected by the transverse conveying screw (07) to the return conveying screw (18).

12. Spreading device according to one of claims 5 to 11,
**characterized in**
**that** the transverse conveying screw (07) and the return conveying screw (18) are driven by a common drive motor (08).

13. Spreading device according to claim 12,
**characterized in**
**that** a gear unit (09) is provided between the drive motor (08) on the one hand and the transverse conveying screw (07) and the return conveying screw (18) on the other hand.

14. Spreading device according to claim 13,
**characterized in**
**that** the transverse conveying screw (07) and the return conveying screw (18) are driven by the gear unit (09) in opposite directions of rotation.

## Revendications

1. Dispositif d'épandage (01) pour une installation de traitement de pâte, avec un rouleau d'épandage (03) pouvant être entraîné en rotation et avec un carter de matériau d'épandage (02) pouvant être rempli de matériau d'épandage, en particulier de farine, le carter de matériau d'épandage (02) présentant au moins une ouverture de sortie (12), où le matériau d'épandage peut être transféré sur une partie de surface tournée vers le haut du rouleau d'épandage rotatif (03), et où le matériau d'épandage peut être étalé à partir d'une partie de surface tournée vers le bas du rouleau d'épandage rotatif (03) sur une pâte située en dessous,
le dispositif d'épandage (01) comprenant un réservoir (04) dans lequel une réserve de matériau d'épandage peut être reçue, le réservoir (04) présentant au moins une ouverture de sortie (10) au niveau de laquelle le matériau d'épandage peut être prélevé, et le réservoir (04) étant disposé latéralement par rapport au rouleau d'épandage (03), et le matériau d'épandage pouvant être transporté du réservoir (04) au carter de matériau d'épandage (02) au moyen d'un dispositif de transport transversal (06), **caractérisé en ce que** un dispositif de transport de retour (17) est en outre prévu dans le carter du matériau d'épandage (02), avec lequel le matériau d'épandage peut être transporté du carter du matériau d'épandage (02) vers la trémie.

2. Dispositif d'épandage selon la revendication 1,
**caractérisé en ce**
**qu'**au moins une ouverture de déchargement (10) du conteneur de stockage (04) est disposée latéralement au-dessus d'une extrémité du rouleau d'épandage (03).

3. Dispositif d'épandage selon les revendications 1 ou 2,
**caractérisé en ce**
**que** le dispositif de transport transversal (06) peut transporter le matériau d'épandage depuis l'ouverture de décharge (10) de la trémie (04) parallèlement au rouleau d'épandage (03) à travers le carter du matériau d'épandage (02).

4. Dispositif d'épandage selon l'une des revendications 1 à 3,
**caractérisé en ce**
**que** le dispositif de transport transversal (06) est conçu à la manière d'une vis sans fin transversale (07) pouvant être entraînée en rotation.

5. Dispositif d'épandage selon la revendication 4,
**caractérisé en ce**
**que** le dispositif de transport à vis (17) est conçu à la manière d'un transporteur à vis (18) qui peut être entraînée en rotation.

6. Dispositif d'épandage selon la revendication 5,
**caractérisé en ce**
**que** le transporteur à vis (18) est disposé parallèlement au transporteur à vis transversal (07).

7. Dispositif d'épandage selon l'une des revendications 4 à 6,
**caractérisé en ce**
**que** le transporteur à vis (18) et/ou le transporteur à vis transversale (07) est monté à rotation sur la paroi (23) du carter de matériau d'épandage (02).

8. Dispositif d'épandage selon l'une quelconque des revendications 4 à 7,
**caractérisé en ce**
**que** le transporteur à vis (18) et/ou le transporteur à vis transversale (07) est en plastique de qualité alimentaire.

9. Dispositif d'épandage selon l'une quelconque des revendications 1 à 8,
**caractérisé en ce**
**qu'**un agitateur (20) est disposé dans la trémie (04), avec lequel le matériau à épandre dans la trémie (04) peut être transporté.

10. Dispositif d'épandage selon la revendication 9,
**caractérisé en ce**
**que** l'agitateur (20) est disposé de manière fixe en rotation à l'extrémité du transporteur à vis (18) tourné vers le récipient de stockage (04) et/ou à l'extrémité du transporteur à vis transversale (07) tournée vers le récipient de stockage (04).

11. Dispositif d'épandage selon l'une des revendications 5 à 10,
**caractérisé en ce**
**que** le filetage de l'extrémité du transporteur à vis (18) opposée au réservoir (04) dépasse le filetage de l'extrémité du transporteur à vis transversale (07) opposée au réservoir (04), une zone de déviation (16) étant formée en plus de l'extrémité du filetage du transporteur à vis transversale (07), dans laquelle le matériau à épandre peut être dévié par le transporteur à vis transversale (07) vers le transporteur à vis (18).

12. Dispositif d'épandage selon l'une des revendications 5 à 11,
**caractérisé en ce**
**que** le transporteur à vis transversale (07) et le transporteur à vis (18) sont entraînés par un moteur d'entraînement commun (08).

13. Dispositif d'épandage selon la revendication 12,
**caractérisé en ce**
**qu'**un réducteur (09) est prévu entre le moteur d'entraînement (08) d'une part et le transporteur à vis transversale (07) et le transporteur à vis (18) d'autre part.

14. Appareil d'épandage selon la revendication 13,
**caractérisé en ce**
**que** le transporteur à vis transversale (07) et le transporteur à vis (18) sont entraînés par le réducteur (09) dans des sens de rotation opposés.
